Europäisches Patentamt

European Patent Office

Office européen des brevets

(19)

(11) Publication number: **0 106 666**
**B1**

## (12) EUROPEAN PATENT SPECIFICATION

(45) Date of publication of patent specification: 25.03.87

(21) Application number: 83306188.0

(22) Date of filing: 13.10.83

(51) Int. Cl.⁴: **E 21 B 43/22,** E 21 B 43/25 // C12P19/06

(54) Stabilizing polysaccharide solutions for tertiary oil recovery at elevated temperature with dithionite.

(30) Priority: 15.10.82 US 434696

(43) Date of publication of application:
25.04.84 Bulletin 84/17

(45) Publication of the grant of the patent:
25.03.87 Bulletin 87/13

(84) Designated Contracting States:
BE DE FR GB IT NL

(56) References cited:
GB-A-2 000 823
US-A-3 908 760
US-A-4 218 327

(73) Proprietor: PFIZER INC.
235 East 42nd Street
New York, N.Y. 10017 (US)

(72) Inventor: Philips, Judson Christopher
1055 Long Cove Road
Gales Ferry Connecticut 06335 (US)

(74) Representative: Moore, James William, Dr.
Pfizer Limited Ramsgate Road
Sandwich Kent CT13 9NJ (GB)

EP 0 106 666 B1

Courier Press, Leamington Spa, England.

## Description

This invention concerns a method of stabilizing polysaccharide biopolymer solutions employed in tertiary oil recovery at elevated temperature.

Tertiary oil recovery is commonly used today to recover the oil which remains in a subterranean petroleum-containing formation after primary and secondary recovery techniques have been exhausted.

One approach to tertiary oil recovery is polymer flooding. In this approach, certain organic polymers are added to at least a portion of the fluid injected into the formation to thicken the fluid and thereby improve the mobility of the entrapped oil as the fluid is driven from the injection site to the production well. Among these polymers are the xanthan gums, hydrophilic polysaccharides produced by fermentation using bacteria of the genus *Xanthomonas*. The biopolymer may be used in the form of the fermentation broth itself, as exemplified in U.S. Patent 4,119,546, or in isolated and reconstituted form, as disclosed in U.S. Patent 3,305,016. Xanthan gums are particularly desirable for polymer flooding since they are good displacing agents; give useful viscosities at low concentrations (5 to 90 centipoises (5 to 90 mPa.s) at 100 to 3,000 ppm); are not lost by extensive adsorption on the porous rock formations; are relatively insensitive to salts, not precipitating or losing viscosity under normal conditions; and are reasonably shear stable and viscosity stable over a wide pH range. Other polysaccharide biopolymers include such as those derived from the genus *Sclerotium* and from the genus *Alcaligenes*, the use of which in enhanced oil recovery is described, for example, in U.S. Patent 3,372,749 and British Patent Specification 2,082,189, respectively.

While xanthan polysaccharide biopolymer solutions have proven to be effective in tertiary oil recovery, one problem which has arisen with their use is in oil reservoirs at elevated temperatures of about 60—150°C. There, the polymer solution tends to be unstable with significant loss in viscosity in a few days, particularly in low-saline (500 ppm or less total dissolved solids) waters.

Solutions to this problem have been suggested. In U.S. Patent 4,141,842, for example, the polymer solution includes a $C_3$ to $C_5$ aliphatic alcohol to stabilize the polysaccharide. In U.S. Patent 4,218,327, the stability of the solution viscosity is improved by initially deoxygenating the aqueous liquid with agents such as sodium hydrosulphite (sodium dithionite) and then adding a sulfur-containing antioxidant, a readily oxidizable water-soluble alcohol or glycol, and the polymer. And in U.K. Patent Application GB 2000823A, aqueous solutions of polymeric mobility control agents, including polysaccharides, are stabilized with an alkylene polyamine, alkanolamine or alicyclic polyamine; the solutions may also contain an oxygen scavenger such as dithionite.

The need still exists for, and it is the primary objective of the present invention to provide, a simple, economical and effective means of stabilizing polysaccharide biopolymer flood control solutions employed at elevated temperature.

The high temperature stability of aqueous polyacrylamide solutions containing sodium hydrosulfite is disclosed by R. D. Shupe in *Journal of Petroleum Technology*, August 1981, pages 1513—1529. In U.S. Patent 3,343,601, plugging of oil formations by ferric hydroxide gel is purportedly minimized by the addition of a water-soluble hydrosulfite to the flood water, optionally containing water-soluble polymeric mobility control agents, during secondary oil recovery.

It has now been found that excellent high-temperature stability of aqueous polysaccharide solutions intended for tertiary oil recovery is obtained by the addition of alkali metal hydrosulfite (dithionite) alone as the stabilizing agent.

The present invention therefore entails a method of oil recovery from subterranean petroleum-containing formations at elevated temperature penetrated by at least one injection well and by one production well in fluid communication with the formation, which comprises injecting into the formation a substantially oxygen-free nongelling aqueous saline solution of a water-soluble polysaccharide biopolymer which has been treated in solution at a pH of at least about 5 by the addition of from about 100 to 400 ppm (parts per million) of alkali metal hydrosulfite as the sole viscosity stabilizer. The polymer is preferably derived from a fermentation broth containing cells of an organism belonging to the genus *Xanthomonas*. The hydrosulfite is preferably added as sodium hydrosulfite and the saline solution preferably has a dissolved salt content of at least about 20,000 ppm.

The above and other objects, features and advantages of the present invention will be appreciated from the following detailed description in conjunction with the accompanying drawings, in which

Fig. 1 is a graph showing the effects of hydrosulfite addition on the viscosity stability at 90°C of polysaccharide biopolymer solutions prepared in sea water;

Fig. 2 is a graph showing the effect of hydrosulfite addition in the presence of ferrous ion on the viscosity stability of polysaccharide biopolymer solutions prepared in sea water;

Fig. 3 is a graph showing the effect of hydrosulfite addition on the viscosity stability at 105°C of polysaccharide biopolymer solutions prepared in sea water;

Fig. 4 is a graph showing the effect of hydrosulfite addition on the viscosity stability at 90°C of polysaccharide biopolymer solutions prepared in low salinity brine;

Fig. 5 is a graph showing the effect of hydrosulfite addition on the viscosity stability at 90°C of polysaccharide biopolymer solutions prepared in 2 percent aqueous sodium chloride solution; and

Fig. 6 is a graph showing the effect of hydrosulfite addition on the stability at 90°C of a medium pyruvate xanthan polysaccharide in sea water.

Long-term viscosity stability is an extremely important requirement for mobility control polymers employed in tertiary oil recovery from high temperature (60—150°C) subterranean reservoirs. The method of the present invention, which employs for mobility control a substantially oxygen-free aqueous saline solution of polysaccharide biopolymer which has been subjected to reduction treatment, provides this desired stability, little change in the viscosity of the solution occurring after months of use.

The polysaccharide biopolymer employed in the method can be any water-soluble polysaccharide useful in polymer floods. Such biopolymers may include, for example, polysaccharides derived from the genus *Sclerotium* or related organisms and polysaccharides derived from the genus *Alcaligenes* or related organisms. Preferably, the biopolymer is xanthan, a polysaccharide derived from fermentation of carbohydrate by the bacteria of the genus *Xanthomonas*, especially the species *Xanthomonas campestris*. Suitable polysaccharide broth preparations include, for example, those disclosed in U.S. Patents 3,301,848, 4,119,546 and 4,296,203, which are incorporated herein by reference. The polymer may be employed in the form of unreconstituted broth or may be reconstituted after isolation from the broth. Normally, the concentration of the polymer in the flood control solution is from about 100 to 2,000 ppm, preferably from about 300 to 1,500 ppm, by weight to provide a solution viscosity of from about 2 to 50 centipoises.

To produce the mobility control solution, the polysaccharide biopolymer is dissolved in aqueous saline solution at a pH of about 5 or greater. Normally this salinity, defined as the soluble salt or ion content present in a saline solution expressed in milligrams total salt per kilogram brine solution, will be about 1,000 ppm or greater. The high temperature stability of the control solution improves with salinity, saline solutions with a dissolved salt content of 20,000 ppm or greater being especially effective. The pH of the saline polymer solution at the time of preparation should be 5 or greater to prevent the deterioration of the stabilizing agent and the acid catalyzed hydrolysis of the polysaccharide, a pH of from about 7 to 8 being preferred.

While the mechanism of the stabilization process is not thoroughly understood, it is believed that the stability of the polysaccharide solution is provided by the inclusion of alkali metal hydrosulfite at a level which results in reduction of oxidizing species in the polymer solution prior to exposure to high temperatures. This normally requires the addition of the hydrosulfite to the solution in the amount of from about 100 to 400 ppm, by weight of the solution, whereby undesirable oxidizing species or transition metals are believed to be rapidly reduced. The oxidizing species may be dissolved oxygen or peroxy species generated in thebroth by air required in the aerobic processing of the broth in the presence of trace amounts of transition metals. It is desirable to have a low dissolved oxygen content when the stabilizer is used, and this is most readily accomplished by use of separated recycled brine produced from the reservoir where anaerobic conditions exist. Natural gas or other cheap inert gas blankets may be used in surface handling to maintain anaerobic conditions.

The hydrosulfite addition may occur either before or after the polymer addition to the saline solution. The treatment may also be applied to the fermentation broth before dilution in field brine or other processing. Any alkali metal hydrosulfite may be used. Of particular value is a stabilized form of sodium hydrosulfite sold under the tradename D-OX by Virginia Chemical Company, Portsmouth, Virginia, and containing 40 weight percent sodium hydrosulfite.

The stabilization process results in a substantially oxygen-free polymer control solution at the time of injection of the solution into the oil-bearing formation. By substantially oxygen-free solution is meant a solution which indicates a dissolved oxygen content of 0.5 ppm or less when tested with the dissolved oxygen test kit supplied by Chemetrics, Inc., Warrenton, Virginia.

An initial increase in viscosity of xanthan solutions upon heating is common, having been noted previously, for example, in U.K. Patent Application GB 2000823A. This effect, referred to as viscosity build, is not well understood but is believed to arise from conformational changes in the polymer. In unstabilized systems, polymer degradation may occur faster than the viscosity build. The situation is complex since both temperature and salinity affect the kinetics of viscosity build and degradation. The viscosity build phenomenon is evident in a number of examples disclosed herein. However, all xanthan broths do not exhibit viscosity build, and xanthan broths that do not exhibit viscosity build can still be stabilized.

Other components which are not viscosity stabilizers and which do not deleteriously affect the beneficial effect of the hydrosulfite stabilizer on viscosity may also be incorporated into the mobility control solution. Such components might include, for example, biocides such as formaldehyde to prevent microbial deterioration of the polysaccharide biopolymer and chelating agents such as sodium citrate to sequester polyvalent ions such as iron.

The following examples are merely illustrative and are not to be construed as limiting the invention, the scope of which is defined by the appended claims.

---

(1) D-Ox, (trade mark) 40 wt percent sodium hydrosulfite, Virginia Chemicals Inc., Portsmouth, Virginia

(2) NaCl 23.89 g, MgCl . 6H$_2$O 10.76 g, CaCl$_2$ 1.241 g, Na$_2$SO$_4$ 4.288 g, NaHCO$_3$ 0.205 g to 1000 g with deionized water

(3) Flocon (trade mark) Biopolymer 4800 (3.5 percent assay), Pfizer Inc., New York, New York

Example 1

A 5-ml aliquot of a sodium hydrosulfite stock solution, prepared by dissolving 3 g commercial stabilized sodium hydrosulfite[1] in 47 g of fresh water, was added to 729 g of synthetic sea water[2], and the hydrosulfite/brine solution was mechanically stirred under nitrogen for 5 minutes. To this solution was added 16.0 g of a commercial liquid form of xanthan biopolymer[3], and the stirring was continued under nitrogen for 1 hour. The biopolymer solution prepared in this manner contained 747 ppm xanthan biopolymer and 160 ppm sodium hydrosulfite.

A 34-ml aliquot of this solution was transferred by syringe to a nitrogen-flushed glass ampule. The ampule was sealed with a torch and allowed to stand at room temperature (25°C) overnight, the size of the ampule being such that about 1 ml of gas space remained after sealing. A series of ampules prepared in this manner was placed in an oil bath at 90°C. Periodically, an ampule was removed from the bath and the viscosity of the polymer solution in the ampule was determined at 25°C using a Brookfield viscometer with UL adapter, 6 RPM.

A second series of ampules containing no sodium hydrosulfite was prepared and tested as a control.

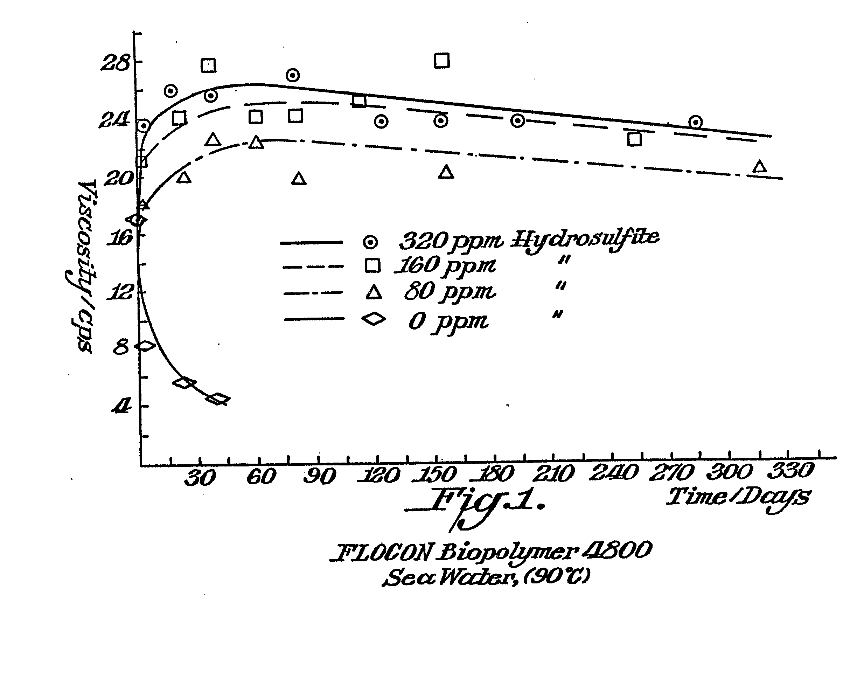

Results of the testing are shown in Fig. 1.

Example 2

The procedure of Example 1 was repeated with the exception that the hydrosulfite stock solution was prepared by diluting 6 g of stabilized sodium hydrosulfite to 50 g with fresh water, the biopolymer solution thereby initially containing 747 ppm xanthan biopolymer and 320 ppm sodium hydrosulfite. Results of this testing are also shown in Fig. 1.

Example 3

A mixture of 734 g of synthetic sea water and 16 g of xanthan liquid (3.5 percent assay) was agitated in a Waring blender for 3 minutes at a Variac setting of 50 volts, and a 33-ml aliquot of the resulting xanthan solution was added to a nitrogen-flushed ampule. A 1-ml aliquot of a stock hydrosulfite solution (0.68 g of stabilized sodium hydrosulfite diluted to 100 g with fresh water) was added to provide a hydrosulfite level of 80 ppm, and the ampule was sealed. A series of ampules prepared in this manner was evaluated as in Example 1 with the results shown in Fig. 1.

Example 4

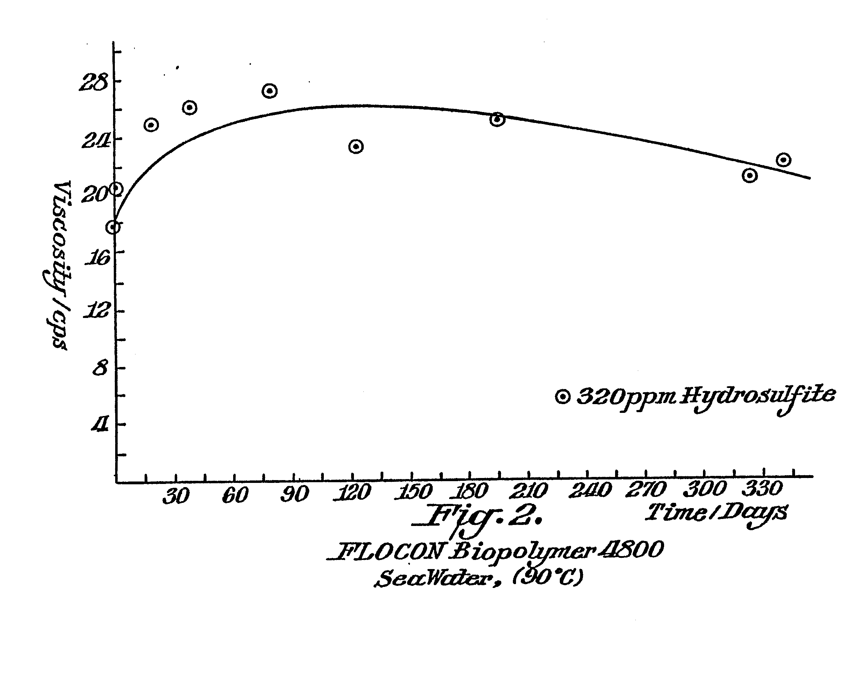

The procedure of Example 2 was repeated with the exception that a 1-ml aliquot of stock ferrous sulfate solution (4.48 g of $FeSO_4 \cdot 7H_2O$ diluted to 100 ml with fresh water) was added subsequent to the 5-minute brine deoxygenation, the solution thereby initially containing 747 ppm xanthan, 320 ppm sodium hydrosulfite and 12 ppm ferrous ion. Results of this testing are shown in Fig. 2.

Example 5

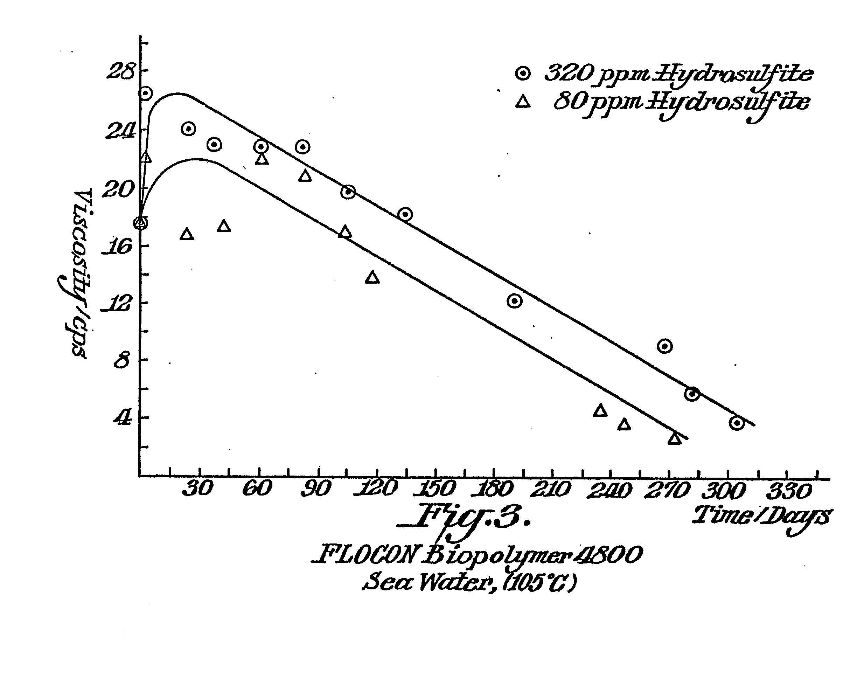

The procedure of Example 2 was repeated with the exceptions that each ampule contained a 32-ml aliquot of the stabilized xanthan solution (747 ppm xanthan, 320 ppm sodium hydrosulfite) and the ampules were heated in an oil bath at 105°C. Results of this testing are shown in Fig. 3.

Example 6

The procedure of Example 1 was repeated with the exceptions that the hydrosulfite stock solution was prepared by diluting 1.5 g of stabilized sodium hydrosulfite to 50 g, a 32-ml aliquot of the stabilized xanthan solution (747 ppm xanthan, 80 ppm sodium hydrosulfite) was utilized for each ampule, and the ampules were heated in an oil bath at 105°C. Results of this testing are also shown in Fig. 3.

Example 7

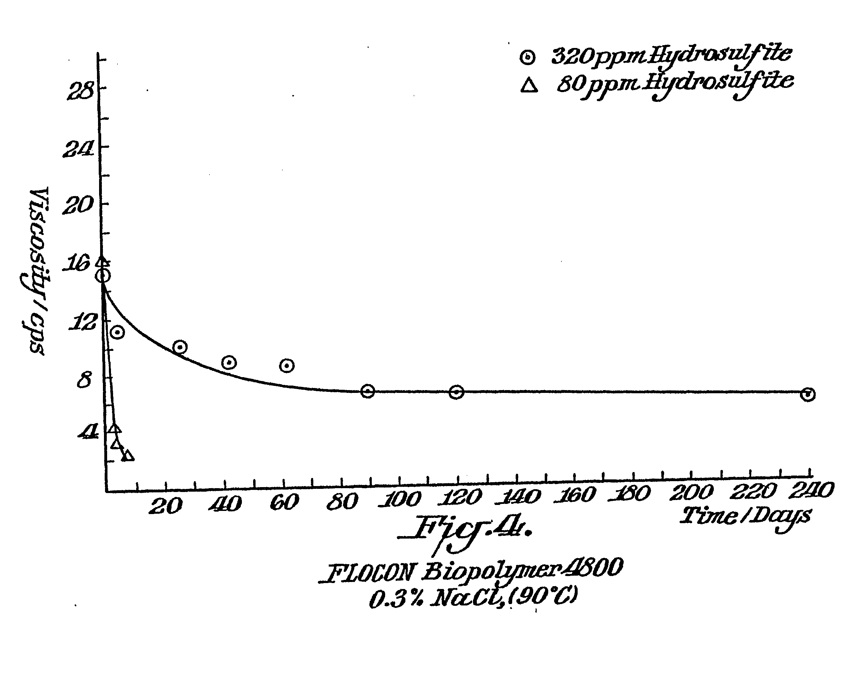

The procedure of Example 1 was repeated with the exceptions that 0.3 percent sodium chloride brine was utilized in place of synthetic sea water and the stock hydrosulfite solution was prepared by diluting 1.5 g of stabilized sodium hydrosulfite to 50 g with fresh water to give a biopolymer solution containing 747 ppm xanthan and 80 ppm sodium hydrosulfite. Results of this testing are shown in Fig. 4.

Example 8

The procedure of Example 2 was repeated with the exception that 0.3 percent sodium chloride brine was utilized in place of synthetic sea water. Results of this testing are shown in Fig. 4.

Example 9

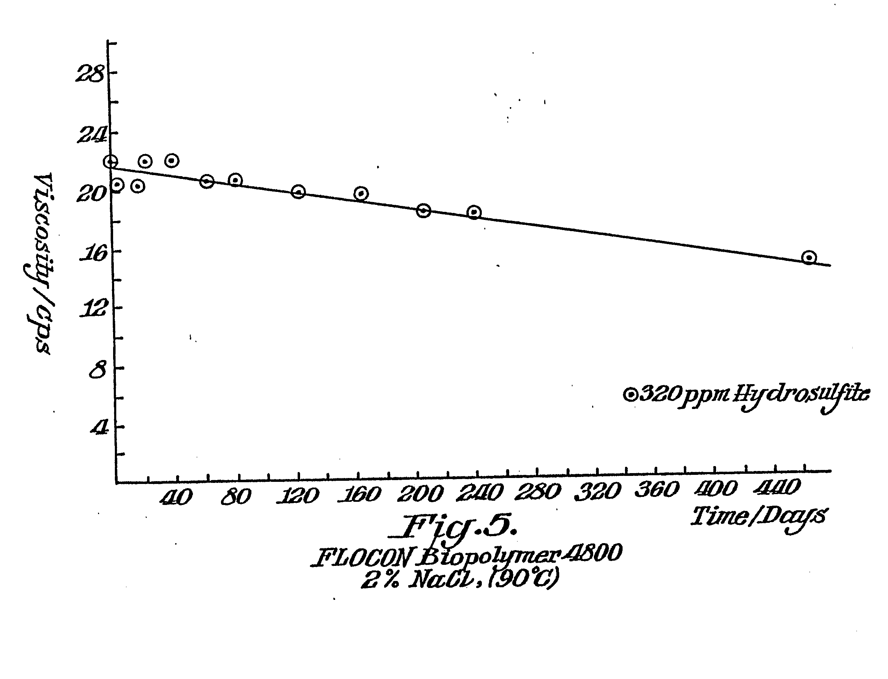

A 10-ml aliquot of a stock hydrosulfite solution (3 g of stabilized sodium hydrosulfite diluted to 50 g with fresh water) was added to 723.4 g of 2 percent sodium chloride brine under a nitrogen atmosphere. The hydrosulfite/brine mixture was mechanically stirred for 5 minutes under nitrogen, and 16.4 g of xanthan liquid (3.41 percent assay) was added. The mixture was mechanically stirred under nitrogen for 1 hour. A series of ampules was prepared and tested as in Example 1. Viscosities of the stabilized solution (746 ppm xanthan, 320 ppm sodium hydrosulfite) after the indicated times at 90°C are shown in Fig. 5.

Example 10

A mixture of 363.8 g of synthetic sea water and 11.2 g of a medium pyruvate xanthan liquid[1] was agitated in a Waring blender for 3 minutes at a Variac setting of 50 volts. A 33-ml aliquot of the resulting xanthan solution was added to a nitrogen-flushed ampule. A 1-ml aliquot of a stock hydrosulfite solution (2.72 g of stabilized sodium hydrosulfite diluted to 100 g with fresh water) was added, providing a biopolymer solution containing 747 ppm xanthan and 320 ppm sodium

---

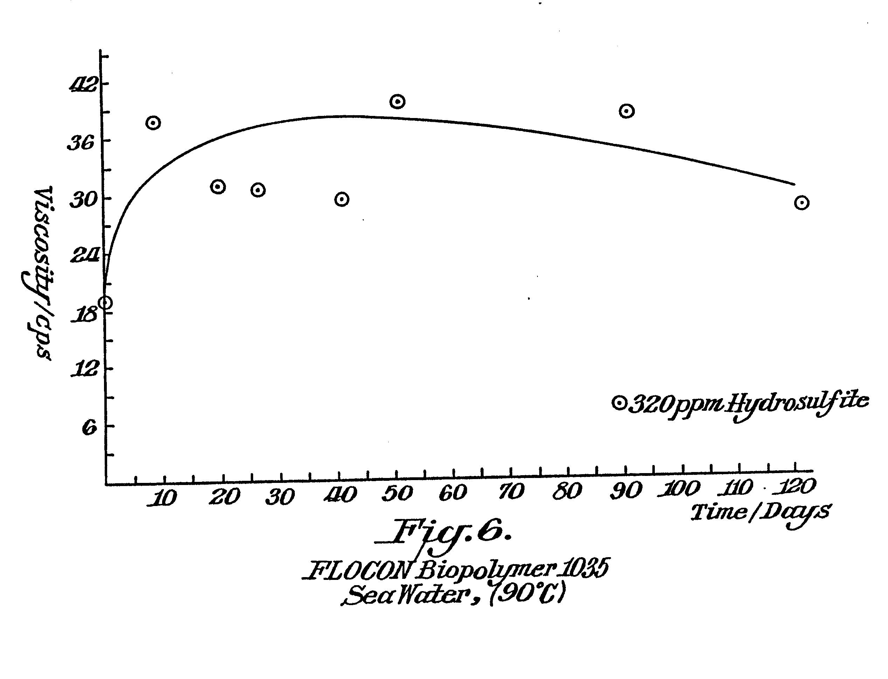

[1] Flocon (trade mark) Biopolymer 1035 (2.5 percent assay), Pfizer Inc., New York, New York hydrosulfite, and the ampule was sealed. A series of ampules prepared in this manner was allowed to stand overnight at 25°C and then placed in an oil bath at 90°C. Viscosity of the biopolymer solution with time was determined as in Example 1, with the results shown in Fig. 6.

## Claims

1. A method of oil recovery from a subterranean petroleum-containing formation at elevated temperature penetrated by at least one injection well and by one production well in fluid communication with the formation, which comprises injecting into said formation a substantially oxygen-free nongelling aqueous saline solution of a water-soluble polysaccharide biopolymer which has been treated in solution at a pH of at least about 5 by the addition of from about 100 to 400 ppm of alkali metal hydrosulfite as the sole viscosity stabilizer.

2. The method of claim 1 wherein said biopolymer is derived from a fermentation broth containing cells of an organism belonging to the genus *Xanthomonas*.

3. The method of claim 2 wherein said saline solution has a dissolved salt content of at least about 20,000 ppm.

## Patentansprüche

1. Verfahren zur Ölgewinnung aus einer unterirdischen Erdöl enthaltenden Formation bei erhöhter Temperatur, durchbohrt von mindestens einem Injektionsbohrloch und einem Produktionsbohrloch in flüssiger Verbindung mit der Formation, das das Injizieren in die Formation einer im wesentlichen Sauerstoff-freien nicht gelierenden wäßrigen Salzlösung eines wasserlöslichen Polysaccharid-Biopolymers, die in Lösung bei einem pH-Wert von mindestens etwa 5 durch die Zugabe von etwa 100 bis 400 ppm eines Akalimetallhydrogensulfites als einzigem Viskositäts-Stabilisierungsmittel behandelt wurde, umfaßt.

2. Verfahren nach Anspruch 1, worin das Biopolymer aus einer Fermentationsbrühe stammt, die Zellen eines zu dem Genus Xanthomonas gehörenden Organismus enthält.

3. Verfahren nach Anspruch 2, worin die Salzlösung einen gelösten Salzgehalt von mindestens etwa 20.000 ppm hat.

## Revendications

1. Procédé de récupération d'huile à partir d'une formation souterraine contenant du pétrole à une température élevée qui est pénétrée par au moins un puits d'injection et par un puits de production en communication de fluide avec ladite formation, qui consiste à injecter dans ladite formation une solution aqueuse saline non gélifiante et substantiellement dépourvue d'oxygène d'un biopolymère de polysaccharide hydrosoluble qui a été traité en solution à un pH d'au moins environ 5 par l'addition d'environ 100 à 400 ppm d'hydrosulfite de métal alcalin comme seul stabilisant de viscosité.

2. Procédé selon la revendication 1, caractérisé en ce que ledit biopolymère dérive d'un bouillon de culture contenant des cellules d'un organisme appartenant au genre *Xanthomonas*.

3. Procédé selon la revendication 2, caractérisé en ce que ladite solution saline a une teneur en sel dissous d'au moins environ 20 000 ppm.

Fig.1.

FLOCON Biopolymer 4800
Sea Water, (90°C)

Viscosity/cps (y-axis)
Time/Days (x-axis)

Legend:
— ⊙ 320 ppm Hydrosulfite
- - □ 160 ppm "
-·- △ 80 ppm "
— ◇ 0 ppm "

Fig.2.

FLOCON Biopolymer 4800
SeaWater, (90°C)

⊙ 320ppm Hydrosulfite

Viscosity / cps

Time / Days

0 106 666

Fig.3.

FLOCON Biopolymer 4800
Sea Water, (105°C)

○ 320 ppm Hydrosulfite
△ 80 ppm Hydrosulfite

Viscosity/cps

Time/Days

0 106 666

Fig. 4.

FLOCON Biopolymer 4800
0.3% NaCl, (90°C)

Fig.5.
FLOCON Biopolymer 4800
2% NaCl, (90°C)

⊙ 320 ppm Hydrosulfite

Viscosity / Cps

Time / Days

0 106 666

Fig. 6.

FLOCON Biopolymer 1035
Sea Water, (90°C)

⊙ 320 ppm Hydrosulfite

0 106 666